# EUROPÄISCHE PATENTANMELDUNG

(11) **EP 4 850 935 A1**
(43) Veröffentlichungstag der Anmeldung: **09.12.2026**
(21) Anmeldenummer: 25180512.3
(22) Anmeldetag: 03.06.2025
(51) Int. Cl.: B60G 21/05

(54) **VERBUNDLENKERACHSE**

(71) Anmelder: Benteler Automobiltechnik GmbH, 33102 Paderborn (DE)
(72) Erfinder: Schultz, Erik, 33102 Paderborn (DE); KOLLMANN, Fabian, 33175 Bad Lippspringe (DE); HAASE, Marianne, 33609 Bielefeld (DE)
(74) Vertreter: Ksoll, Peter

(57) **Zusammenfassung**

Die Erfindung betrifft eine Verbundlenkerachse 1, welche ein Torsionsprofil 4 und endseitig an dem Torsionsprofil 4 angeordnete Längslenker 2, 3 aufweist. Das Torsionsprofil 4 besitzt im Querschnitt zwei Schenkel 11, 12 sowie einen die Schenkel 11, 12 verbindenden Steg 13. In jedem Endabschnitt 14 des Torsionsprofils 4 ist ein Verstärkungsblech 15 angeordnet. Das Verstärkungsblech 15 weist einen äußeren Längenabschnitt 16 und einen inneren Längenabschnitt 17 sowie zwischen dem äußeren Längenabschnitt 17 und dem inneren Längenabschnitt 16 einen Übergangsabschnitt 18 auf. An seinem längslenkerseitigen äußeren Rand 19 ist das Verstärkungsblech 15 mit einem Längslenker 2, 3 gefügt. An seinen längsseitigen Rändern 20, 21 ist das Verstärkungsblech 15 mit den Schenkeln 11, 12 des Torsionsprofils 4 gefügt. Im inneren Längenabschnitt 17 ist das Verstärkungsblech 15 durch einen Fügepunkt 22 mit dem Steg 13 des Torsionsprofils 4 gefügt, wobei der Fügepunkt 22 mit Abstand A zum torsionsprofilseitigen inneren Rand 23 des Verstärkungsblechs 15 angeordnet ist. Erfindungsgemäß weist jeder längsseitige Rand 20, 21 eines Verstärkungsblechs 15 einen ersten Längsrandabschnitt 27 auf, in welchem der Rand 20, 21 mit einer längsseitigen Außenfläche 28 überlappend am Schenkel 11, 12 anliegt und einen zweiten Längsrandabschnitt 29 auf, in welchem der Rand 20, 21 mit einer Kantenfläche 30 an den Schenkel 11, 12 stößt.

## Beschreibung

Die Erfindung betrifft eine Verbundlenkerachse für Kraftfahrzeuge gemäß den Merkmalen im Oberbegriff von Anspruch 1.

Eine Verbundlenkerachse weist zwei biege- und verdrehsteife radführende Längslenker und ein sich zwischen den Längslenkern quer erstreckendes Torsionsprofil auf, welches die Längslenker torsionsweich verbindet. Eine Verbundlenkerachse zeichnet sich durch eine gute Seitenführung bei Kurvenfahrt sowie einen günstigen Bauraumbedarf aus ebenso wie durch ein geringes Gewicht.

Verbundlenkerachsen mit einem im Querschnitt U- oder V-förmigen Torsionsprofil gehören zum Stand der Technik. Üblicherweise ist das Torsionsprofil mit den Längslenkern verschweißt.

Aufgrund der im Betrieb wirkenden hohen dynamischen und auch statischen Kräfte, insbesondere von Längskräften, liegen hohe Belastungen auf der Schweißnaht zwischen dem Torsionsprofil und den Längslenkern. In den Endabschnitten soll das Torsionsprofil möglichst steif gestaltet sein, um unerwünschte Spur- und Sturzänderungen zu vermeiden. Gleichzeitig soll das Torsionsprofil aber auch torsionsweich sein, was üblicherweise durch einen torsionsweichen Mittelabschnitt des Torsionsprofils gewährleistet wird. Im Übergangsbereich zwischen torsionsweichem Mittelabschnitt und den steiferen Endabschnitten kommt es im Betrieb zu hohen Spannungsspitzen, welche die Lebensdauer einer Verbundlenkerachse beeinträchtigen können. Zur Erhöhung der Steifigkeit der Endabschnitte eines Torsionsprofils ist es bekannt, die Endabschnitte durch in das Torsionsprofil eingesetzte Verstärkungsbleche zu versteifen. Solche Vorschläge sind durch die EP 2 896 522 B1 oder die WO 2018/013989 A1 bekannt.

Auch die DE 10 2015 015 519 A1 offenbart eine Verbundlenkerachse mit einem zwischen zwei Längslenkern angeordneten Torsionsprofil, wobei jeweils in einem Endabschnitt des Torsionsprofils ein Verstärkungsblech angeordnet ist.

Durch die CN 212 046 756 U zählt eine Verbundlenkerachse zum Stand der Technik, welche ein Torsionsprofil und endseitig an dem Torsionsprofil angeordnete Längslenker aufweist. Das Torsionsprofil besitzt im Querschnitt zwei Schenkel sowie einen die Schenkel verbindenden Steg. In jedem Endabschnitt des Torsionsprofils ist ein Verstärkungsblech angeordnet. Das Verstärkungsblech ist jeweils mit einem Längslenker und an seinen längsseitigen Rändern mit den Schenkeln des Torsionsprofils gefügt. Weiterhin ist jedes Verstärkungsblech in einem inneren Längenabschnitt durch einen Fügepunkt mit dem Steg des Torsionsprofils gefügt, wobei der Fügepunkt mit Abstand zum torsionsprofilseitigen inneren Rand des Verstärkungsblechs angeordnet ist.

Der Erfindung liegt ausgehend vom Stand der Technik die Aufgabe zugrunde, eine Verbundlenkerachse im Belastungsverhalten zu verbessern und in der Lebensdauer zu steigern, wobei die Festigkeit und Stabilität der Verbindung zwischen dem Torsionsprofil und einem Verstärkungsblech verbessert wird.

Die Lösung dieser Aufgabe besteht nach der Erfindung in einer Verbundlenkerachse gemäß den Merkmalen von Anspruch 1.

Vorteilhafte Ausgestaltungen und Weiterbildungen der erfindungsgemäßen Verbundlenkerachse sind Gegenstand der abhängigen Ansprüche.

Eine Verbundlenkerachse weist zwei radführende Längslenker und ein Torsionsprofil auf, welches die beiden Längslenker torsionsweich verbindet. Das Torsionsprofil ist mit den Längslenkern durch Schweißverbindungen verbunden. Die Enden des Torsionsprofils weisen eine auf die Außenkontur der Längslenker angepasste Fügekontur auf. Das Torsionsprofil umgreift hierbei einen Längslenker bereichsweise klauenartig. In den Endabschnitten des Torsionsprofils ist jeweils ein Verstärkungsblech angeordnet. Ein Verstärkungsblech ist mit dem Torsionsprofil und einem Längslenker gefügt.

Das Torsionsprofil besitzt im Querschnitt zwei Schenkel sowie einen die Schenkel verbindenden Steg. Vorzugsweise weist das Torsionsprofil einen U-förmigen Querschnitt auf. In jedem Endabschnitt des Torsionsprofils ist ein Verstärkungsblech angeordnet. Das Verstärkungsblech besitzt auf der Seite zu einem Längslenker einen äußeren Längenabschnitt und einen zur Mitte des Torsionsprofils orientierten inneren Längenabschnitt.

Zwischen dem äußeren Längenabschnitt und dem inneren Längenabschnitt weist das Verstärkungsblech einen Übergangsabschnitt auf. Jedes Verstärkungsblech ist an seinem längslenkerseitigen äußeren Rand mit einem Längslenker gefügt. An seinen längsseitigen Rändern ist das Verstärkungsblech jeweils mit einem Schenkel des Torsionsprofils gefügt. Im inneren Längenabschnitt des Verstärkungsblechs ist ein Fügepunkt vorgesehen. Im Fügepunkt ist das Verstärkungsblech mit dem Steg des Torsionsprofils gefügt. Der Fügepunkt ist mit einem Abstand zum torsionsprofilseitigen inneren Rand des Verstärkungsblechs angeordnet.

Begriffe wie äußere, innere, längslenkerseitig, torsionsprofilseitig, längsseitig, oben, unten, oberseitig, unterseitig, horizontal, vertikal, längs, quer oder Längsrichtung beziehen sich auf die bestimmungsgemäße Einbaulage und die Ausrichtung der Verbundlenkerachse und deren Bauteile in einem Kraftfahrzeug.

Der äußere Längenabschnitt eines Verstärkungsblechs ist zu einem Längslenker gerichtet und stößt mit seinen längslenkerseitigen äußeren Rand an einen Längslenker an.

Der innere Längenabschnitt eines Verstärkungsblechs liegt im Torsionsprofil auf der zur Mitte des Torsionsprofils bzw. der Achsmitte gerichteten Seite.

Ein längsseitiger Rand des Verstärkungsblechs erstreckt sich entlang der Längsseite des Verstärkungsblechs in Längsachse des Torsionsprofils.

Der torsionsprofilseitige innere Rand des Verstärkungsblechs liegt an dem dem äußeren Rand entgegengesetzten Ende des Verstärkungsblechs. Die Stirnseite des Verstärkungsblechs weist in Richtung zur Achsmitte.

Erfindungsgemäß weist jeder längsseitige Rand eines Verstärkungsblechs einen ersten Längsrandabschnitt und einen zweiten Längsrandabschnitt auf. Im ersten Längsrandabschnitt liegt der Rand mit einer längsseitigen Außenfläche an einem Schenkel an. Die Außenfläche des Rands im ersten Längsrandabschnitt und eine Innenfläche des Schenkels überlappen sich. In dem zweiten Längsrandabschnitt stößt der Rand mit seiner Kantenfläche an die Innenseite des Schenkels.

Die Kantenfläche befindet sich an einer längsseitigen Schnittkante des Verstärkungsblechs. Die längsseitige Außenfläche ist ein Teil der Oberfläche des Verstärkungsblechs, die nach der Formung des Verstärkungsblechs nach außen und bezogen auf das Torsionsprofil zu einem Schenkel zeigt.

Die Fügung zwischen einem längsseitigen Rand des Verstärkungsblechs und einem Schenkel des Torsionsprofils ist durch eine Schweißnaht gebildet. Die Schweißnaht erstreckt sich in Längsrichtung des Torsionsprofils vom Längslenker bis zum freien Ende des Verstärkungsblechs.

Entlang des ersten Längsrandabschnitts ist zwischen einem Schenkel des Torsionsprofils und der längsseitigen Außenfläche des Rands eine Überlappstoß gebildet. Entlang des zweiten Längsrandabschnitts ist zwischen dem Schenkel und der Kantenfläche des Rands ein T-Stoß oder Schrägstoß gebildet.

Bei dem Überlappstoß liegen die längsseitigen Außenflächen des Rands und die Innenflächen des Schenkels aneinander, insbesondere parallel, flächig und bündig.

Die längsseitige Außenfläche des Rands ist an einem Flansch des Verstärkungsblechs gebildet, der so umgeformt ist, dass die Außenfläche zumindest abschnittsweise im Wesentlichen parallel zur Innenfläche des Schenkels verläuft und an diesem anliegt.

Die längsseitigen Außenflächen verlaufen insbesondere parallel zu den Schenkeln des Torsionsprofils.

Bei dem T-Stoß oder Schrägstoß stößt die Kantenfläche stumpf in einem rechten Winkel (T-Stoß) oder in einem anderen Winkel als einem 90°-Winkel (Schrägstoß) innen an einen Schenkel an.

Der erste Längsrandabschnitt weist eine Länge auf und der zweite Längsrandabschnitt weist eine Länge auf. Der erste Längsrandabschnitt ist länger ausgeführt als der zweite Längsrandabschnitt. Besonders vorteilhaft ist das Verhältnis der Länge des ersten Längsrandabschnitts zur Länge des zweiten Längsrandabschnitts zwischen 1 : 1 und 10 : 1, und insbesondere 2 : 1 und 10 : 1 bemessen.

Zwischen der Innenseite eines Schenkels des Torsionsprofils und einem längsseitigen Rand des Verstärkungsblechs erstreckt sich ein Schweißstoß. Die Art des Schweißstoßes verändert sich im Verlauf der Längserstreckung des längsseitigen Rands und wechselt von einem Überlappstoß im ersten Längsrandabschnitt zu einem T-Stoß oder Schrägstoß im zweiten Längsrandabschnitt. Der Übergang erfolgt fließend.

Die erfindungsgemäße Schweißstoßführung ist vorteilhaft für die mechanische Stabilität sowie eine hohe Festigkeit und die Langlebigkeit der Schweißbaugruppe und damit der gesamten Verbundlenkerachse. Insbesondere können Spannungsspitzen reduziert werden.

Der Wechsel von einer Schweißnaht im Überlappstoß auf einen T-Stoß bzw. Schrägstoß bringt für die Verbindung zwischen Torsionsprofil und Verstärkungsblech Vorteile mit sich, insbesondere eine verbesserte Festigkeit und Stabilität der Verbindung sowie eine Reduzierung von Spannungsspitzen. Im T-Stoß oder Schrägstoß werden die Lasten vorteilhaft verteilt, da die Schweißnaht in einer Richtung auf die querliegende Fläche wirkt. Das sorgt für eine höhere Tragfähigkeit. Beim Überlappstoß wirkt die Belastung hauptsächlich auf die Überlappung. Auch die Gefahr von Spannungen und Rissen wird durch den T-Stoß reduziert, weil die Naht im äußeren Längenabschnitt vorteilhaft in die Form des Torsionsprofils integriert ist. Insgesamt kann durch den Wechsel von einem Überlappstoß auf den T-Stoß bzw. Schrägstoß die mechanische Belastbarkeit verbessert, die Nahtqualität erhöht und die Langlebigkeit der geschweißten Verbindung gesteigert werden.

Ein Verstärkungsblech erstreckt sich von den Längslenkern aus in Längsrichtung des Torsionsprofils Richtung der Achsmitte. Durch das Versteifungsblech wird ein Steifigkeitsanstieg in Bezug auf die Torsionssteifigkeit von innen nach außen sanft gestaltet.

Das Torsionsprofil ist einlagig und besitzt einen U-förmigen oder V-förmigen Querschnitt. Üblicherweise ist ein Verstärkungsblech jeweils an einem Längslenker auf Höhe der Öffnung des Torsionsprofils verbunden. In Richtung zur Achsmitte dringt das Verstärkungsblech tiefer in die Profilöffnung des Torsionsprofils ein bis das Verstärkungsblech mit dem inneren Längenabschnitt mit dem Steg des Torsionsprofis in Kontakt gelangt.

Im inneren Längenabschnitt ist der Fügepunkt mit dem Steg des Torsionsprofils angeordnet. Der Fügepunkt weist einen Abstand zum torsionsprofilseitigen inneren Rand des Verstärkungsblechs auf. Der innere Rand des Verstärkungsblechs ist nicht mit dem Steg gefügt. Stirnseitig weist der innere Längenabschnitt des Verstärkungsblechs vorzugsweise eine Ausnehmung auf.

An seinem längslenkerseitigen äußeren Rand ist ein Verstärkungsblech mit einem Längslenker gefügt, insbesondere verschweißt. Ebenso ist das Verstärkungsblech an seinen beiden längsseitigen Rändern jeweils mit einem Schenkel des Torsionsprofils gefügt, insbesondere verschweißt.

Mit dem äußeren Rand des Verstärkungsblechs untergreift das Verstärkungsblech einen Längslenker zumindest abschnittsweise. Am längslenkerseitigen äußeren Rand können hierzu Abschnitte, beispielsweise in Form von klauenartigen Vorsprüngen vorgesehen sein, welche sich in Längsrichtung des Verstärkungsblechs erstrecken und die unter einen Längslenker greifen.

Zwischen dem äußeren Längenabschnitt und dem inneren Längenabschnitt des Verstärkungsblechs erstreckt sich ein Übergangsabschnitt. Der Übergangsabschnitt weist eine Taillierung auf.

Durch die Taillierung im Übergangsabschnitt werden scharfe Radien in der Form des Bauteils reduziert, wodurch Spannungen im Verstärkungsblech und dem Übergangsbereich sowie insbesondere dem Fügepunkt reduziert werden. Auch die stirnseitige Ausnehmung trägt zu einer Spannungsreduktion bei. Hierdurch wird eine Spannungsentlastung am inneren Ende des Verstärkungsblechs bewirkt. Der Fügepunkt liegt mit Abstand weiter innen im inneren Längenabschnitt des Verstärkungsblechs.

Der Übergangsabschnitt ist im Querschnitt kanalförmig konfiguriert und weist zwei Wangenabschnitte auf, die durch einen Scheitelabschnitt verbunden sind. Die Taillierung ist im Scheitelabschnitt des Übergangsabschnitts ausgebildet.

Insbesondere verjüngt sich der Scheitelabschnitt ausgehend vom äußeren Längenabschnitt bis zur Taillierung.

Weiterhin geht die Taillierung in einen sich gegenüber der Taillierung verbreiternden Basisbereich des inneren Längenabschnitts über.

Vorzugsweise ist der Fügepunkt in dem Basisbereich des inneren Längenabschnitts angeordnet, wobei seitliche Armabschnitte des Basisbereichs am Fügepunkt entlang verlaufen. Die Armabschnitte können den Fügepunkt umschließen.

Stirnseitig weist der innere Längenabschnitt im inneren Rand des Verstärkungsblechs die Ausnehmung auf. Die Ausnehmung ist seitlich von Zinken begrenzt. Der innere Rand des Verstärkungsblechs erstreckt sich quer zur Längsrichtung des Verstärkungsblechs, wobei die Zinken gegenüber dem inneren Rand in Richtung zur Achsmitte vorstehen.

Jeweils entlang eines längsseitigen Rands des Verstärkungsblechs verläuft eine Schweißnaht. Jede Schweißnaht erstreckt sich vom Längslenker bzw. dem längslenkerseitigen Ende des Torsionsprofils bis zum freien Ende des Verstärkungsblechs an den Zinken.

Eine Schweißnaht kann hierbei auch in mehreren Schweißnahtabschnitten erzeugt werden, um Richtung und Verlauf zu optimieren.

Bei einer Ausführungsform eines Verstärkungsblechs weist der innere Rand mittig eine gegenüber dem inneren Rand vorstehende Lasche auf. Die Lasche ist insbesondere rechteckig oder halbrund konfiguriert. Grundsätzlich kann eine Lasche auch andersartig konfiguriert sein, beispielsweise trapez- oder dreiecksförmig. Die Enden der Zinken stehen gegenüber einer Stirnseite der Lasche vor.

Der innere Längenabschnitt des Verstärkungsblechs weist seitlich parallel zu den Schenkeln des Torsionsprofils orientierte Flansche auf.

An den Flanschen befinden sich die längsseitigen Außenflächen, mit welchen der längsseitige Rand des Verstärkungsblechs an den Schenkeln anliegt.

Der erste Längsrandabschnitt verläuft entlang des inneren Längenabschnitts des Verstärkungsblechs und zumindest über einen Teil entlang des Übergangsabschnitts. Der zweite Längsrandabschnitt verläuft zumindest entlang des äußeren Längenabschnitts des Verstärkungsblechs.

Vorzugsweise gehen die Wangenabschnitte des Übergangsabschnitts in Seitenabschnitte des äußeren Längenabschnitts über.

Eine weitere vorteilhafte Ausgestaltung sieht vor, dass sich der äußere Längenabschnitt zum äußeren Rand des Verstärkungsprofils hin verbreitert.

Der Fügepunkt ist durch eine form- und/oder stoffschlüssige Fügung gebildet. Insbesondere ist der Fügepunkt durch eine Schweißung, vorzugsweise eine Lochschweißung, gebildet. Hierbei wird eine Schweißnaht in Form einer Rundnaht mit einer Länge von ca. 100 mm am Innenumfang eines Lochs gelegt.

Auch kann der Fügepunkt durch eine Clinchung, eine Durchsetzfügung oder eine Klebung bzw. Klebstofffügung gebildet sein.

Im äußeren Längenabschnitt und/oder im Übergangsabschnitt des Verstärkungsblechs können Funktionselemente wie Öffnungen, Prägungen oder Positionierhilfen vorgesehen sein.

Im Längsschnitt weist das Verstärkungsblech vorzugsweise einen gebogenen, insbesondere mehrfach gebogenen Verlauf auf. Insbesondere kann das Verstärkungsblech im Längsschnitt einen S-förmigen oder stufenförmigen Verlauf besitzen.

Zwischen dem zur Mitte des Torsionsprofils gerichteten inneren Längenabschnitt und dem zu einem Längslenker gerichteten äußeren Längenabschnitt ist der Übergangsabschnitt vorgesehen. Der Übergangsabschnitt verläuft zum Steg des Torsionsprofils geneigt. Die Neigung verläuft mit einem Winkel zwischen 25° und 35°, insbesondere liegt der Neigungswinkel zwischen 28° und 32°.

Durch die erfindungsgemäße Ausgestaltung des Verbindungsbereichs der Verbundlenkerachse und die Geometrie ebenso wie die Fügeverbindungen des Verstärkungsblechs ist es möglich, Spannungen in der Bauteilstruktur und insbesondere auch im Bereich des Fügepunkts zu reduzieren. Der innere Längenabschnitt wird mit dem Steg des Torsionsprofils über den Fügepunkt verbunden. Stirnseitig entlang des inneren Rands ist das Verstärkungsblech nicht gefügt.

Die Fügung zwischen einem längsseitigen Rand des Verstärkungsblechs und einem Schenkel des Torsionsprofils ist durch eine Schweißnaht gebildet. Die Schweißnaht weist eine in Längsrichtung des Torsionsprofils vom Längslenker aus bis zum Ende der Schweißnaht gemessene Länge auf. Der Fügepunkt ist in einem Fügepunktabstand vom längslenkerseitigen äußeren Rand des Verstärkungsblechs angeordnet. Der Fügepunktabstand ist in Längsrichtung entlang der Längsachse des Torsionsprofils gemessen vom längslenkerseitigen äußeren Rand des Verstärkungsprofils bis zur Mitte des Fügepunkts. Vorteilhaft ist, dass die Länge der Schweißnaht an einer Längsseite des Verstärkungsblechs größer bemessen ist als der Fügepunktabstand. Das bedeutet, dass die Schweißnaht länger ist als der Fügepunktabstand. Die Schweißnaht verläuft über den Fügepunkt hinaus. Der Fügepunkt liegt näher an einem Längslenker bzw. dem längslenkerseitigen äußeren Rand als das Ende der Schweißnaht. Die Schweißnaht erstreckt sich auch über das entfernst liegendste Ende des Fügepunktes hinaus.

Grundsätzlich ist es auch möglich, dass eine Schweißnaht länger ausgeführt ist als die Länge eines längsseitigen Rands, so dass die Schweißnaht über das Ende bzw. die Stirnkante eines Verstärkungsblechs hinaus verläuft.

Die Erfindung ist nachfolgend anhand von Zeichnungen beschrieben. Es zeigen:
- Figur 1: eine Verbundlenkerachse in einer perspektivischen Ansicht;
- Figur 2: die Verbundlenkerachse in einer Perspektive von unten;
- Figur 3: eine unterseitige Ansicht auf den Verbindungsbereich zwischen einem Torsionsprofil und einem Längslenker;
- Figur 4: einen Schnitt durch die Darstellung der Figur 3 entlang der Linie IV-IV;
- Figur 5: eine Ansicht auf das Torsionsprofil mit integrierten Verstärkungsblechen von unten;
- Figur 6: ein Verstärkungsblech in einer perspektivischen Seitenansicht;

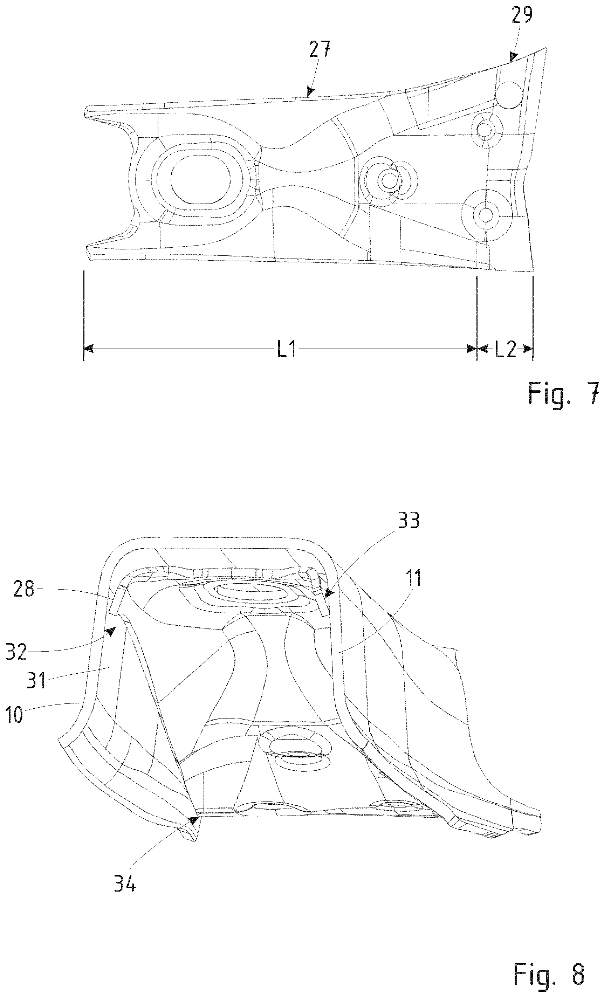

- Figur 7: eine Ansicht auf ein Verstärkungsblech von unten;
- Figur 8: eine Ansicht auf das Torsionsprofil und das Verstärkungsblech von der Achsmitte aus;

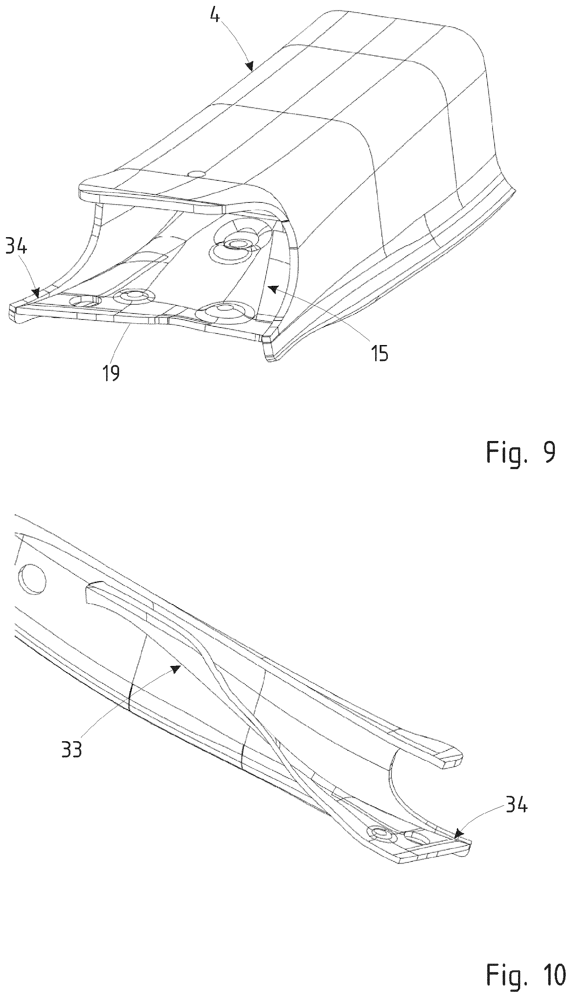

- Figur 9: eine Ansicht auf das längslenkerseitige Ende eines Torsionsprofils mit integriertem Verstärkungsblech;
- Figur 10: eine Ansicht auf ein längslenkerseitiges Ende eines Torsionsprofils mit integriertem Verstärkungsblech in einer Längsschnittdarstellung;
- Figur 11: eine weitere perspektivische Schnittdarstellung des längslenkerseitigen Endes des Torsionsprofils und des Verstärkungsblechs;
- Figur 12: eine weitere Ausführungsform einer Verbundlenkerachse in einer perspektivischen Ansicht;
- Figur 13: eine Ansicht auf eine weitere Ausführungsform eines Verstärkungsblechs und
- Figur 14: einen Ausschnitt einer Verbundlenkerachse mit der Darstellung des Verbindungsbereichs zwischen Längslenker, Torsionsprofil und Verstärkungsblech.

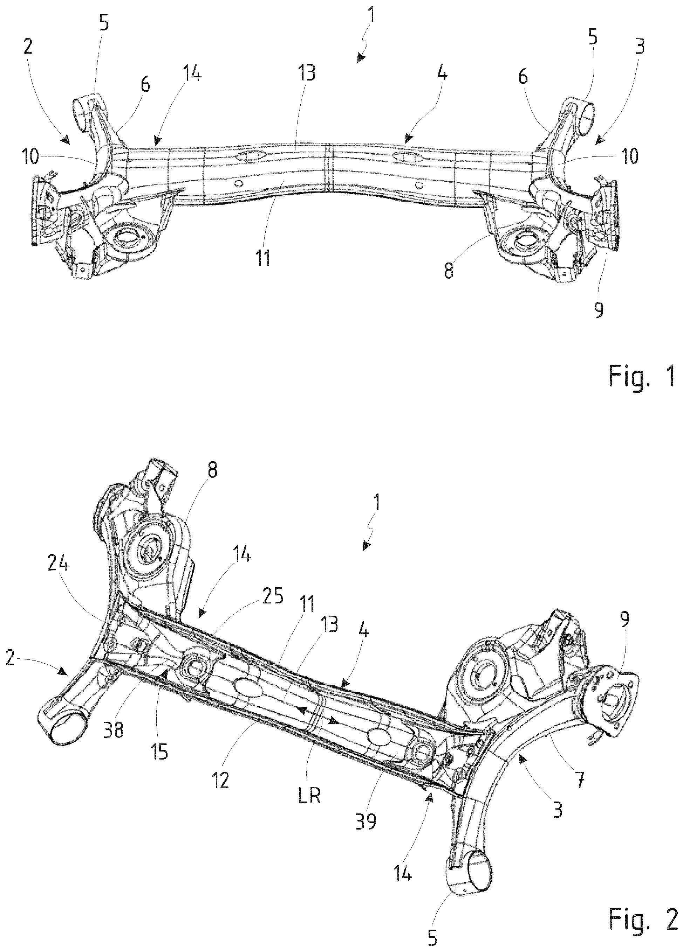

Die Figur 1 zeigt eine Verbundlenkerachse 1 in einer perspektivischen Ansicht von der Rückseite eines Kraftfahrzeugs aus gesehen.

Figur 2 zeigt eine unterseitige Perspektive der Verbundlenkerachse 1.

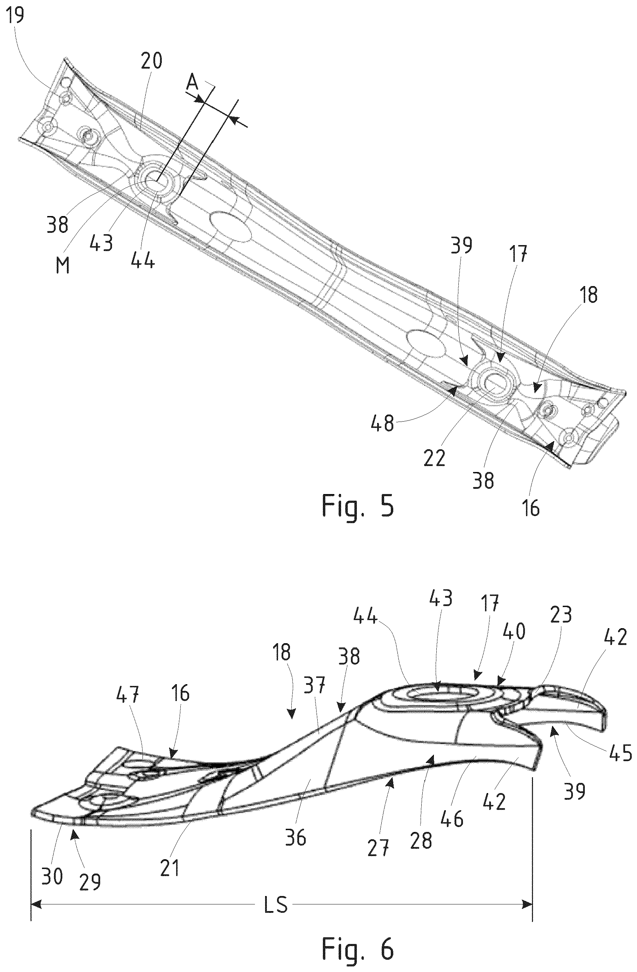

Die Verbundlenkerachse 1 weist zwei radführende verdreh- und biegesteife Längslenker 2, 3 auf, die durch ein Torsionsprofil 4 miteinander verbunden sind. Ein Torsionsprofil 4 in einer perspektivischen Ansicht in das Querschnittsprofil zeigt die Figur 5.

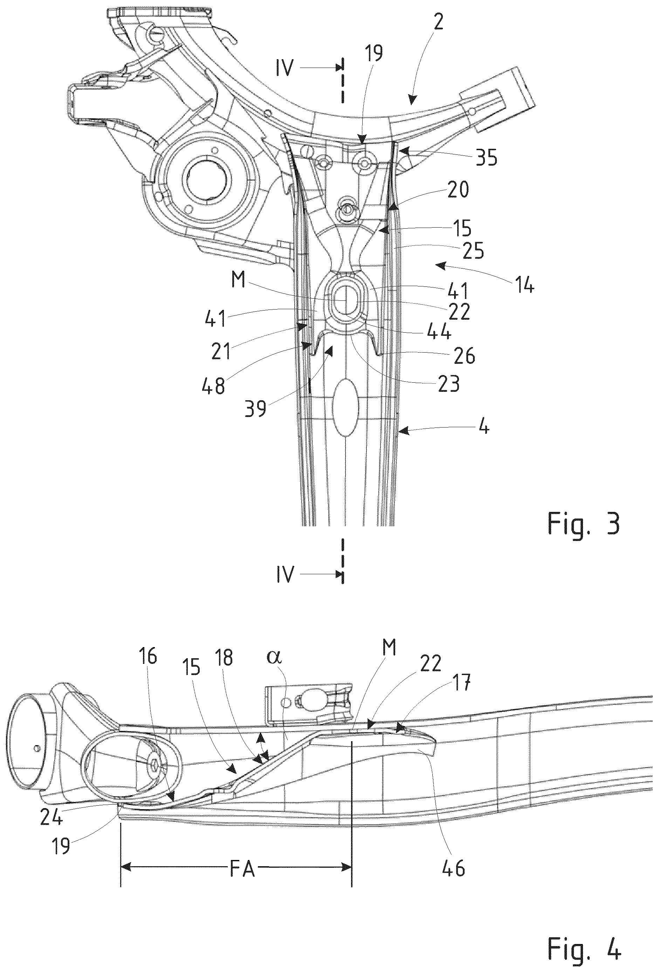

In der Figur 3 ist eine unterseitige Ansicht auf den Verbindungsbereich zwischen dem Torsionsprofil 4 und einem Längslenker 2 dargestellt.

Die Figur 4 zeigt einen Längsschnitt durch die Darstellung der Figur 3 entlang der Linie IV-IV.

Die Längslenker 2, 3 sind rohrförmig mit einer über ihre Länge variierenden Querschnittskontur.

Zur Verbindung mit dem Fahrzeugaufbau eines Kraftfahrzeugs besitzen die Längslenker 2, 3 vordere Führungslager 5, die jeweils stirnseitig an einem vorderen Längenabschnitt 6 eines Längslenkers 2, 3 schweißtechnisch festgelegt sind. Das Torsionsprofil 4 liegt vor der Radmitte und nimmt alle Hoch- und Seitenkraftmomente auf. Seitlich am hinteren Längenabschnitt 7 eines Längslenkers 2, 3 ist jeweils ein Federteller 8 und außenseitig ein Radträger 9 vorgesehen.

Zwischen dem vorderen Längenabschnitt 6 und dem hinteren Längenabschnitt 7 eines Längslenkers 2, 3 befindet sich ein Verbindungsabschnitt 10. Im Verbindungsabschnitt 10 stößt das Torsionsprofil 4 jeweils auf einen Längslenker 2, 3 und ist mit diesem verschweißt.

Das Torsionsprofil 4 ist im Querschnitt U-förmig konfiguriert und weist zwei seitliche Schenkel 11, 12 auf, die durch einen Steg 13 verbunden sind.

In jedem Endabschnitt 14 des Torsionsprofils 4 ist ein Verstärkungsblech 15 angeordnet. Dies erkennt man auch in der Darstellung der Figur 5.

Ein Verstärkungsblech 15 in einer Perspektive zeigt die Darstellung der Figur 6.

Das Verstärkungsblech 15 weist einen äußeren Längenabschnitt 16 auf. Der äußere Längenabschnitt 16 befindet sich längslenkerseitig und ist jeweils an einem Längslenker 2, 3 festgelegt. Des Weiteren besitzt das Verstärkungsblech 15 einen inneren Längenabschnitt 17. Der innere Längenabschnitt 17 ist zur Achsmitte hin gerichtet. Zwischen dem äußeren Längenabschnitt 16 und dem inneren Längenabschnitt 17 ist ein Übergangsabschnitt 18 vorgesehen.

Ein Verstärkungsblech 15 ist an seinem längslenkerseitigen äußeren Rand 19 mit einem Längslenker 2, 3 gefügt. Das Verstärkungsblech 15 weist längsseitige Ränder 20, 21 auf. Die längsseitigen Ränder 20, 21 erstrecken sich in Längsrichtung LR des Torsionsprofils 4. Die Längsrichtung LR des Torsionsprofils 4 entspricht der Längsrichtung des Verstärkungsblechs 15. An einem längsseitigen Rand 20, 21, entlang der gesamten Länge eines längsseitigen Rands 20, 21, ist das Verstärkungsblech 15 jeweils mit einem Schenkel 11, 12 des Torsionsprofils 4 gefügt. Im inneren Längenabschnitt 17 ist das Verstärkungsblech 15 durch einen Fügepunkt 22 mit dem Steg 13 des Torsionsprofils 4 gefügt. Der Fügepunkt 22 ist mit Abstand A zum torsionsprofilseitigen inneren Rand 23 des Verstärkungsblechs 15 angeordnet.

Mit einem Längslenker 2, 3 ist das Verstärkungsblech 15 jeweils entlang eines längslenkerseitigen äußeren Rands 19 durch eine Schweißnaht 24 gefügt.

Entlang der längsseitigen Ränder 20, 21 ist das Verstärkungsblech 15 jeweils mit einem Schenkel 11, 12 des Torsionsprofils 4 durch eine Schweißnaht 25 verbunden. Die Schweißnaht 25 weist eine in Längsrichtung LR des Torsionsprofils 4 vom Längslenker 2, 3 bis zum Ende 26 der Schweißnaht 25 gemessene Länge LS auf. Diese ist größer bemessen als der Fügepunktabstand FA des Fügepunkts 22. Der Fügepunktabstand FA des Fügepunkts 22 ist gemessen vom längslenkerseitigen äußeren Rand 19 des Verstärkungsblechs 15 bis zur Mitte M des Fügepunkts 22.

Auch über das innere Fügepunktende des Fügepunkts 22 erstreckt sich die Länge LS der Schweißnaht 25 hinaus, wobei das innere Fügepunktende des Fügepunkts 22 die vom längslenkerseitigen Rand 19 des Verstärkungsblechs 15 am entfernst liegendste Stelle des Fügepunkts 22 ist.

Jeder längsseitige Rand 20, 21 weist einen ersten Längsrandabschnitt 27 auf, in welchem der Rand 20, 21 mit einer längsseitigen Außenfläche 28 innenseitig an einem Schenkel 11, 12 anliegt. Weiterhin weist jeder längsseitige Rand 20, 21 einen zweiten Längsrandabschnitt 29 auf, in welchem der Rand 20, 21 mit seiner äußeren Kantenfläche 30 an die Innenseite 31 eines Schenkel 11, 12 stößt.

Die längsseitige Außenfläche 23 des Rands 20, 21 verläuft parallel zur Innenfläche 32 eines Schenkels 11, 12. Die Außenfläche 28 liegt flächig und bündig an der Innenfläche 32 des Schenkels 11, 12 an.

Entlang des ersten Längsrandabschnitts 27 des Verstärkungsblechs 15 und dem benachbarten Schenkel 11, 12 ist ein Überlappstoß 33 gebildet. Entlang des zweiten Längsrandabschnitts 29 des Rands 20, 21 des Verstärkungsblechs 15 ist ein T-Stoß oder Schrägstoß 34 gebildet.

Der erste Längsrandabschnitt 27 ist länger ausgebildet als der zweite Längsrandabschnitt 29.

Der erste Längsrandabschnitt 27 weist eine Länge L1 auf, die im Verhältnis zwischen 1 : 1 und 10 : 1 und insbesondere 2 : 1 und 10 : 1 länger ist als die Länge L2 des zweiten Längsrandabschnitts 29.

Im Verlauf der Schweißnaht 25 findet ein Wechsel von einem Überlappstoß 33 im ersten Längsrandabschnitt 27 auf einen T- oder Schrägstoß 34 im zweiten Längsrandabschnitt 24 statt. Der Übergang ist fließend. Die Schweißnaht 25 ist durchgehend geführt. Durch die Schweißnaht 25 und die Schweißstoßausbildung mit dem Wechsel von einem Überlappstoß 33 auf einen T-Stoß bzw. Schrägstoß 34 wird ein Steifigkeitsanstieg in Bezug auf die Torsionssteifigkeit von innen nach außen zum längslenkerseitigen Ende 35 des Torsionsprofils 4 hin sanft gestaltet.

Der Übergangsabschnitt 18 ist kanalförmig konfiguriert und weist zwei Wangenabschnitte 36 auf, die durch einen Scheitelabschnitt 37 verbunden sind.

Der Übergangsabschnitt 18 verläuft geneigt gegenüber dem Steg 13 des Torsionsprofils mit einem Winkel α, der zwischen 25° und 35° bemessen ist und im dargestellten Ausführungsbeispiel ca. 28° - 32° beträgt.

Der Übergangsabschnitt 18 weist eine Taillierung 38 auf. Weiterhin besitzt das Verstärkungsblech 15 stirnseitig im inneren Längenabschnitt 17 eine Ausnehmung 39.

Die Taillierung 38 ist im Scheitelabschnitt 37 des Übergangsabschnitts 18 ausgebildet. Der Scheitelabschnitt 37 verjüngt sich ausgehend vom äußeren Längenabschnitt 16 bis zur Taillierung 38. Die Taillierung 38 setzt sich in einen sich gegenüber der Taillierung 38 verbreiternden Basisbereich 40 des inneren Längenabschnitts 17 fort. Hierbei geht die Taillierung 38 in den verbreiterten Basisbereich 40 des inneren Längenabschnitts 17 über.

Der Fügepunkt 22 ist im Basisbereich 40 des inneren Längenabschnitts 17 des Verstärkungsblechs 15 angeordnet. Seitliche Armabschnitte 41 des Basisbereichs 40 laufen entlang des Fügepunkts 22. Stirnseitig erstrecken sich seitlich der Ausnehmung 39 zur Achsenmitte gerichtete Zinken 42. Die Zinken 42 erstrecken sich in Verlängerung der seitlichen Armabschnitte 41 in Längsrichtung LR des Torsionsprofils 4. Die Zinken 42 begrenzen die Ausnehmung 39 seitlich auf der zu einem Schenkel 11, 12 des Torsionsprofils 4 liegenden Seite.

Der Fügepunkt 22 ist durch eine Lochschweißung gebildet. Hierzu ist im inneren Längenabschnitt 17 ein Loch 43 vorgesehen. Bei dem Loch 43 handelt es sich um ein Langloch, dessen längere Achse in Längsrichtung LR des Torsionsprofils 4 orientiert ist. Der Innenumfang 44 des Lochs 43 ist umlaufend mit dem Steg 13 des Torsionsprofils 4 verschweißt. Hierzu ist eine Schweißnaht in Form einer Rundnaht gesetzt.

Der innere Längenabschnitt 17 des Verstärkungsblechs 15 weist seitlich parallel zu den Schenkeln 11, 12 des Torsionsprofils 4 orientierte Flansche 45, 46 auf.

An den Flanschen 45, 46 befinden sich die längsseitigen Außenflächen 28 der ersten Längsrandabschnitte 27, mit welchen die Ränder 20, 21 innenseitig an den Schenkeln 11, 12 anliegen.

Die Flansche 45, 46 des inneren Längenabschnitts 17 gehen in die Wangenabschnitte 36 des Übergangsabschnitts 18 über.

Die ersten Längsrandabschnitte 27 und die Außenflächen 28 erstrecken sich in Längsrichtung über die Wangenabschnitte 36 so weit, wie die Außenflächen 28 innenseitig an den Schenkeln 11, 12 anliegen.

Die Wangenabschnitte 36 des Übergangsabschnitts 18 gehen in Seitenabschnitte 47 des äußeren Längenabschnitts 16 über. Der äußere Längenabschnitt 16 verbreitert sich zum äußeren Rand 19 des Verstärkungsblechs 15 hin.

Stirnseitig entlang des inneren Rands 23 am im Torsionsprofil 4 liegenden Ende 48 des Verstärkungsblechs 15 ist das Verstärkungsblech 15 nicht mit dem Steg 13 gefügt. Der Fügepunkt 22 liegt weiter innen im inneren Längenabschnitt 17. Der innere Längenabschnitt 17 kontaktiert den Steg 13 des Torsionsprofils 4. Dort ist der Fügepunkt 22 durch die Lochschweißung gesetzt.

Durch die Anbindung des Verstärkungsblechs 15 im Verbindungsbereich zwischen dem Endabschnitt 14 eines Torsionsprofils 4 und einem Längslenker 2, 3 können Spannungen in der Struktur der Verbundlenkerachse 1, insbesondere dem Verbindungsbereich und dem Bereich des Fügepunktes 22 reduziert werden. Eine deutliche Reduzierung von Spannungsspitzen wird durch die Taillierung 27 und die vordere stirnseitige Ausnehmung 28 unterstützt. Auch die Tatsache, dass die Schweißnähte 25 an den längsseitigen Rändern 20, 21 des Verstärkungsblechs 15 länger geführt sind als der Fügepunktabstand FA, so dass die Schweißnähte 25 über den Fügepunkt 22 hinauslaufen, trägt zu einer deutlichen Reduzierung von Spannungen in den punktförmigen Fügepunkten 22 bei. Vorteilhaft ist weiterhin, dass die Schweißnähte über den torsionsprofilseitigen inneren Rand 23 hinauslaufen.

Technisch besonders vorteilhaft ist die Schweißstoßkonfiguration entlang der längsseitigen Ränder 20, 21 und der Schenkel 11, 12 des Torsionsprofils 4. Im ersten Längsrandabschnitt 27 liegt die längsseitige Außenfläche 28 parallelflächig an einem Schenkel 11, 12 überlappend an. Im zweiten Längsrandabschnitt 29 stößt der Rand 20, 21 mit seiner äußeren Kantenfläche 30 stumpf an einen Schenkel 11, 12. Es findet ein Wechsel im Verlauf der Schweißnaht 25 von einem Überlappstoß 33 auf einen T- oder Schrägstoß 34 statt. Dies trägt zu einer Verbesserung des Belastungsverhaltens und der Lebensdauer einer Verbundlenkerachse 1 insgesamt bei, wobei die Festigkeit und die Stabilität der Verbindung zwischen dem Torsionsprofil 4 und dem Verstärkungsblech 15 gesteigert wird.

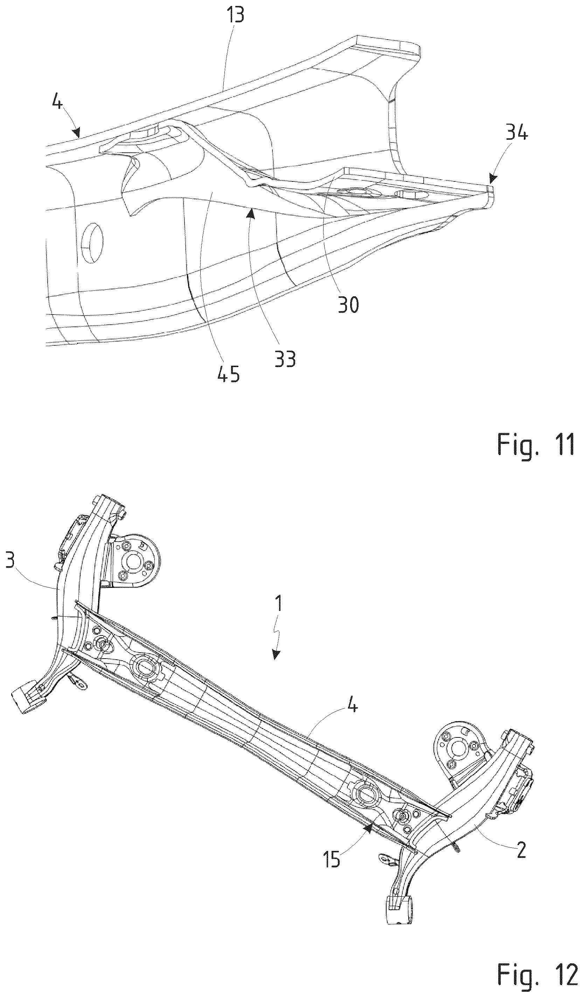

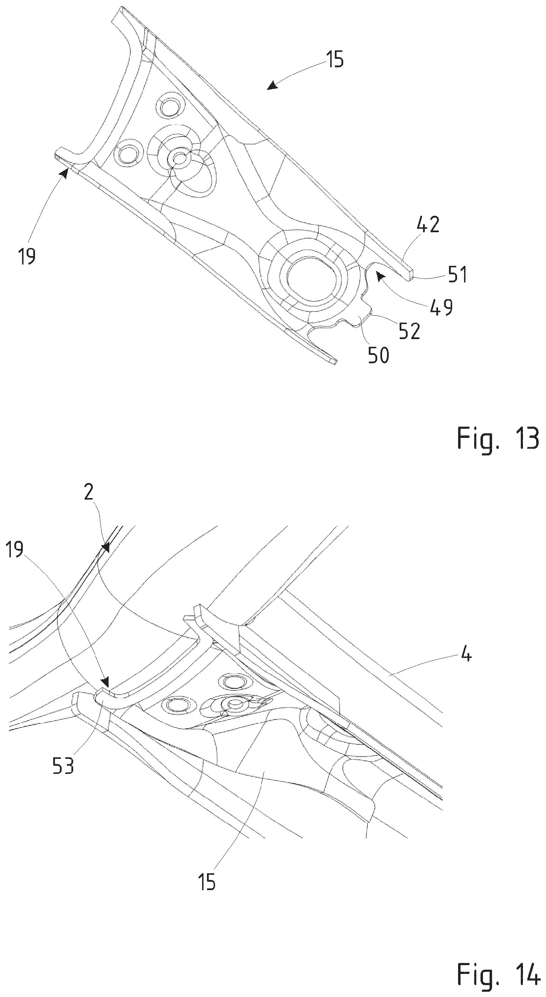

In der Figur 12 ist eine Verbundlenkerachse 1 dargestellt mit einem Verstärkungsblech 15 in einer angewandelten Form. Das Verstärkungsblech 15 ist in der Figur 13 dargestellt. Den Verbindungsbereich zwischen dem Torsionsprofil 4 und einem Längslenker 2 der Verbundlenkerachse 1 zeigt die Figur 14.

Die Verbundlenkerachse 1 und deren wesentlichen Bauteile entspricht der zuvor beschriebenen Ausführungsform. Auf die vorherige Beschreibung und die zugehörigen Bezugszeichen wird verwiesen.

Das Verstärkungsblech 15, wie insbesondere anhand der Figur 13 zu erkennen, weist am inneren Längenabschnitt 17 stirnseitig eine Ausnehmung 39 auf. Die Ausnehmung 39 ist seitlich von Zinken 42 begrenzt. Der innere Rand 49 des Verstärkungsblechs 15 erstreckt sich quer zur Längsrichtung LR des Verstärkungsblechs 15. Die Zinken 42 stehen gegenüber dem inneren Rand 49 vor.

Mittig im inneren Rand 49 ist eine gegenüber dem inneren Rand 49 vorstehende Lasche 50 vorgesehen. Die Enden 51 der Zinken 42 stehen gegenüber der Stirnseite 52 der Lasche 50 vor.

Mit dem längslenkerseitigen äußeren Rand 19 untergreift das Verstärkungsblech 15 einen Längslenker 2, 3. Hierzu sind am längslenkerseitigen Rand 19 klauenartige Vorsprünge 53 vorgesehen.

### Bezugszeichen:

- 1 -: Verbundlenkerachse
- 2 -: Längslenker
- 3 -: Längslenker
- 4 -: Torsionsprofil
- 5 -: Führungslager
- 6 -: vorderer Längenabschnitt zu 2, 3
- 7 -: hinterer Längenabschnitt zu 2, 3
- 8 -: Federteller
- 9 -: Radträger
- 10 -: Verbindungsabschnitt
- 11 -: Schenkel
- 12 -: Schenkel
- 13 -: Steg
- 14 -: Endabschnitt
- 15 -: Verstärkungsblech
- 16 -: äußeren Längenabschnitt
- 17 -: innerer Längenabschnitt
- 18 -: Übergangsabschnitt
- 19 -: längslenkerseitiger äußerer Rand
- 20 -: längsseitiger Rand
- 21 -: längsseitiger Rand
- 22 -: Fügepunkt
- 23 -: torsionsprofilseitiger innerer Rand
- 24 -: Schweißnaht
- 25 -: Schweißnaht
- 26 -: Ende v. 25
- 27 -: erster Längsrandabschnitt
- 28 -: Außenfläche
- 29 -: zweiter Längsrandabschnitt
- 30 -: Kantenfläche
- 31 -: Innenseite v. 11, 12
- 32 -: Innenfläche v. 11, 12
- 33 -: Überlappstoß
- 34 -: Schrägstoß
- 35 -: längslenkerseitiges Ende v. 4
- 36 -: Wangenabschnitt
- 37 -: Scheitelabschnitt
- 38 -: Taillierung
- 39 -: Ausnehmung
- 40 -: Basisbereich
- 41 -: Armabschnitt
- 42 -: Zinke
- 43 -: Loch
- 44 -: Innenumfang
- 45 -: Flansch
- 46 -: Flansch
- 47 -: Seitenabschnitt
- 48 -: Ende v. 15
- 49 -: innerer Rand v. 15
- 50 -: Lasche
- 51 -: Ende v. 42
- 52 -: Stirnseite v. 50
- 53 -: Vorsprung

- A -: Abstand
- FA -: Fügepunktabstand
- LS -: Länge
- M -: Mitte v. 22
- LR -: Längsrichtung zu 4
- L1 -: Länge v. 27
- L2 -: Länge v. 29
- α -: Winkel

## Patentansprüche

1. Verbundlenkerachse (1), welche ein Torsionsprofil (4) und endseitig an dem Torsionsprofil (4) angeordnete Längslenker (2, 3) aufweist, wobei das Torsionsprofil (4) im Querschnitt zwei Schenkel (11, 12) sowie einen die Schenkel (11, 12) verbindenden Steg (13) besitzt und in jedem Endabschnitt (14) des Torsionsprofils (4) ein Verstärkungsblech (15) angeordnet ist, wobei das Verstärkungsblech (15) an seinem längslenkerseitigen äußeren Rand (19) mit einem Längslenker (2, 3) gefügt ist und an seinen längsseitigen Rändern (20, 21) mit den Schenkeln (11, 12) des Torsionsprofils (4) gefügt ist sowie in einem inneren Längenabschnitt (17) durch einen Fügepunkt (22) mit dem Steg (13) des Torsionsprofils (4) gefügt ist, wobei der Fügepunkt (22) mit Abstand (A) zum torsionsprofilseitigen inneren Rand (23) des Verstärkungsblechs (15) angeordnet ist, **dadurch gekennzeichnet, dass** jeder längsseitige Rand (20, 21) eines Verstärkungsblechs (15) einen ersten Längsrandabschnitt (27) aufweist, in welchem der Rand (20, 21) mit einer längsseitigen Außenfläche (28) am Schenkel (11, 12) anliegt und einen zweiten Längsrandabschnitt (29) aufweist, in welchem der Rand (20, 21) mit seiner Kantenfläche (30) an den Schenkel (11, 12) stößt.

2. Verbundlenkerachse (1) nach Anspruch 1, **dadurch gekennzeichnet, dass** die Fügung zwischen einem längsseitigen Rand (20, 21) des Verstärkungsblechs (15) und einem Schenkel (11, 12) des Torsionsprofils (4) durch eine Schweißnaht (25) gebildet ist, wobei entlang des ersten Längsrandabschnitts (27) ein Überlappstoß (33) gebildet ist und entlang des zweiten Längsrandabschnitts (29) ein T-Stoß oder ein Schrägstoß (34) gebildet ist.

3. Verbundlenkerachse (1) nach Anspruch 1 oder 2, **dadurch gekennzeichnet, dass** die längsseitigen Außenflächen (28) zumindest abschnittsweise im Wesentlichen parallel zu den Schenkeln (11, 12) des Torsionsprofils (4) verlaufen.

4. Verbundlenkerachse (1) nach einem der Ansprüche 1 bis 3, **dadurch gekennzeichnet, dass** der erste Längsrandabschnitt (27) länger ist als der zweite Längsrandabschnitt (29).

5. Verbundlenkerachse (1) nach einem der Ansprüche 1 bis 4, **dadurch gekennzeichnet, dass** der erste Längsrandabschnitt (27) eine Länge (L1) aufweist und der zweite Längsrandabschnitt (29) eine Länge (L2) aufweist, wobei das Verhältnis der Länge (L1) des ersten Längsrandabschnitts (27) zur Länge (L2) des zweiten Längsrandabschnitts (29) zwischen 2:1 und 10:1 bemessen ist.

6. Verbundlenkerachse (1) nach einem der Ansprüche 1 bis 4, **dadurch gekennzeichnet, dass** das Verstärkungsblech (15) zwischen dem zur Mitte des Torsionsprofils (4) gerichteten inneren Längenabschnitt (17) einem zu einem Längslenker (2, 3) gerichteten äußeren Längenabschnitt (16) einen Übergangsabschnitt (18) aufweist, wobei der Übergangsabschnitt (18) zum Steg (13) des Torsionsprofils (4) mit einem Winkel (α) zwischen 25° und 35°, insbesondere ca. 28° - 32°, geneigt verläuft.

7. Verbundlenkerachse (1) nach Anspruch 6, **dadurch gekennzeichnet, dass** der erste Längsrandabschnitt (27) entlang des inneren Längenabschnitts (17) und zumindest über einen Teil entlang des Übergangsabschnitts (18) verläuft und der zweite Längsrandabschnitt (29) zumindest entlang des äußeren Längenabschnitts (16) verläuft.

8. Verbundlenkerachse (1) nach einem der Ansprüche 1 bis 7, **dadurch gekennzeichnet, dass** der innere Längenabschnitt (17) des Verstärkungsblechs (15) stirnseitig eine Ausnehmung (39) aufweist, welche seitlich von Zinken (42) begrenzt ist, wobei der innere Rand (49) des Verstärkungsblechs (15) sich quer zur Längsrichtung (LR) des Verstärkungsblechs (15) erstreckt und die Zinken (42) gegenüber dem inneren Rand (49) vorstehen.

9. Verbundlenkerachse (1) nach Anspruch 8, **dadurch gekennzeichnet, dass** der innere Rand (49) mittig eine gegenüber dem inneren Rand (49) vorstehende Lasche (50) aufweist, wobei die Enden (51) der Zinken (42) gegenüber einer Stirnseite (52) der Lasche (50) vorstehen.

10. Verbundlenkerachse (1) nach einem der Ansprüche 6 bis 9, **dadurch gekennzeichnet, dass** der Übergangsabschnitt (18) zwei Wangenabschnitte (36) aufweist, die durch einen Scheitelabschnitt (37) verbunden sind, wobei im Scheitelabschnitt (37) eine Taillierung (38) ausgebildet ist.

11. Verbundlenkerachse (1) nach einem der Ansprüche 1 bis 10, **dadurch gekennzeichnet, dass** der äußere Rand (19) des Verstärkungsblechs (15) oder ein Abschnitt hiervon einen Längslenker (2, 3) untergreift.

12. Verbundlenkerachse (1) nach einem der Ansprüche 1 bis 11, **dadurch gekennzeichnet, dass** sich der äußere Längenabschnitt (16) zum äußeren Rand (19) des Verstärkungsprofils (15) verbreitert.

## Geänderte Patentansprüche

### Geänderte Patentansprüche gemäss Regel 137(2) EPÜ.

1. Verbundlenkerachse (1), welche ein Torsionsprofil (4) und endseitig an dem Torsionsprofil (4) angeordnete Längslenker (2, 3) aufweist, wobei das Torsionsprofil (4) im Querschnitt zwei Schenkel (11, 12) sowie einen die Schenkel (11, 12) verbindenden Steg (13) besitzt und in jedem Endabschnitt (14) des Torsionsprofils (4) ein Verstärkungsblech (15) angeordnet ist, wobei das Verstärkungsblech (15) einen zu einem Längslenker (2, 3) gerichteten äußeren Längenabschnitt (16), einen zur Mitte des Torsionsprofil (4) gerichteten inneren Längenabschnitt (17) und einen zwischen dem äußeren Längenabschnitt (16) und dem inneren Längenabschnitt (17) angeordneten Übergangsabschnitt (18) aufweist, wobei das Verstärkungsblech (15) an seinem längslenkerseitigen äußeren Rand (19) mit einem Längslenker (2, 3) gefügt ist und an seinen längsseitigen Rändern (20, 21) mit den Schenkeln (11, 12) des Torsionsprofils (4) gefügt ist, wobei der innere Längenabschnitt (17) des Verstärkungsbleches (15) durch einen Fügepunkt (22) mit dem Steg (13) des Torsionsprofils (4) gefügt ist, wobei der Fügepunkt (22) mit Abstand (A) zu einem torsionsprofilseitigen inneren Rand (23) des Verstärkungsblechs (15) angeordnet ist, **dadurch gekennzeichnet, dass** der Übergangsabschnitt (18) des Verstärkungsblechs (15) kanalförmig mit zwei Wangenabschnitten (36) und einem die Wangenabschnitte (36) verbindenden Scheitelabschnitt (37) ausgebildet ist, wobei der Scheitelabschnitt (37) eine Taillierung (38) aufweist und der Übergangsabschnitt (18) gegenüber dem Steg (13) des Torsionsprofils (4) geneigt verläuft, und dass jeder längsseitige Rand (20, 21) des Verstärkungsblechs (15) einen ersten Längsrandabschnitt (27) und einen zweiten Längsrandabschnitt (29) aufweist, wobei im ersten Längsrandabschnitt (27) eine längsseitige Außenfläche (28) des Verstärkungsbleches (15) flächig an einer Innenfläche (32) eines Schenkels (11, 12) des Torsionsprofils (4) anliegt und im zweiten Längsrandabschnitt (29) eine Kantenfläche (30) des Verstärkungsblechs (15) an die Innenseite (31) des Schenkels (11, 12) anstößt, wobei eine Schweißnaht (25) entlang des längsseitigen Rands (20, 21) über den Fügepunkt (22) hinausgeführt ist.

2. Verbundlenkerachse (1) nach Anspruch 1, **dadurch gekennzeichnet, dass** die Schweißnaht (25) entlang des ersten Längsrandabschnitts (27) ein Überlappstoß (33) und entlang des zweiten Längsrandabschnitts (29) ein T-Stoß oder ein Schrägstoß (34) bildet.

3. Verbundlenkerachse (1) nach einem der Ansprüche 1 oder 2, **dadurch gekennzeichnet, dass** der erste Längsrandabschnitt (27) länger ist als der zweite Längsrandabschnitt (29).

4. Verbundlenkerachse (1) nach einem der Ansprüche 1 bis 3, **dadurch gekennzeichnet, dass** der erste Längsrandabschnitt (27) eine Länge (L1) aufweist und der zweite Längsrandabschnitt (29) eine Länge (L2) aufweist, wobei das Verhältnis der Länge (L1) des ersten Längsrandabschnitts (27) zur Länge (L2) des zweiten Längsrandabschnitts (29) zwischen 2:1 und 10:1 bemessen ist.

5. Verbundlenkerachse (1) nach einem der Ansprüche 1 bis 4, **dadurch gekennzeichnet, dass** der Übergangsabschnitt (18) mit einem Winkel (α) zwischen 25° und 35°, insbesondere ca. 28° - 32°zum Steg (13) geneigt ist.

6. Verbundlenkerachse (1) nach einem der Ansprüche 1 bis 5, **dadurch gekennzeichnet, dass** der innere Längenabschnitt (17) des Verstärkungsblechs (15) stirnseitig eine Ausnehmung (39) aufweist, welche seitlich von Zinken (42) begrenzt ist, wobei der innere Rand (49) des Verstärkungsblechs (15) sich quer zur Längsrichtung (LR) des Verstärkungsblechs (15) erstreckt und die Zinken (42) gegenüber dem inneren Rand (49) vorstehen.

7. Verbundlenkerachse (1) nach Anspruch 6, **dadurch gekennzeichnet, dass** der innere Rand (49) mittig eine gegenüber dem inneren Rand (49) vorstehende Lasche (50) aufweist, wobei die Enden (51) der Zinken (42) gegenüber einer Stirnseite (52) der Lasche (50) vorstehen.

8. Verbundlenkerachse (1) nach einem der Ansprüche 1 bis 7, **dadurch gekennzeichnet, dass** der Fügepunkt (22) durch eine Lochschweißung gebildet ist, wobei das Verstärkungsblech (15) über einen Innenumfang (44) einer Öffnung (43) mit dem Steg (13) verschweißt ist.

9. Verbundlenkerachse (1) nach einem der Ansprüche 1 bis 8, **dadurch gekennzeichnet, dass** der Übergangsabschnitt (18) sich ausgehend vom äußeren Längenabschnitt (16) zur Taillierung (38) hin verjüngt und anschließend in einen verbreiterten Basisbereich (49) des inneren Längenabschnitts (17) übergeht.

10. Verbundlenkerachse (1) nach einem der Ansprüche 1 bis 9, **dadurch gekennzeichnet, dass** der Fügepunkt (22) innerhalb des Basisbereichs des inneren Längenabschnitts (17) angeordnet ist und seitliche Armabschnitte (41) des Basisbereichs (40) entlang des Fügepunkts (22) verlaufen.

11. Verbundlenkerachse (1) nach einem der Ansprüche 1 bis 10, **dadurch gekennzeichnet, dass** der äußere Rand (19) des Verstärkungsblechs (15) oder ein Abschnitt hiervon einen Längslenker (2, 3) untergreift.

12. Verbundlenkerachse (1) nach einem der Ansprüche 1 bis 11, **dadurch gekennzeichnet, dass** sich der äußere Längenabschnitt (16) zum äußeren Rand (19) des Verstärkungsprofils (15) verbreitert.
